# EUROPEAN PATENT SPECIFICATION

(11) **EP 1 952 910 B1**
(45) Date of publication and mention of the grant of the patent: **02.01.2013**
(21) Application number: 08001446.7
(22) Date of filing: 25.01.2008
(51) Int. Cl.: B22C 9/04, F16K 5/06, F16K 11/087, B22C 7/02, B22C 9/10, B22D 19/00

(54) **Valve ball element and method of manufacturing a valve ball element**
Ventilkugelelement und Verfahren zur Herstellung eines Ventilkugelelements
Élément de soupape à bille et procédé de fabrication d'un élément de soupape à bille

(30) Priority: 30.01.2007 CN 200710002952
(43) Date of publication of application: 06.08.2008
(73) Proprietor: VALVE-TEK MFG. CO., LTD., Tai-Ping City T'ai chung (TW)
(72) Inventor: Shih, Chao, Tai-Ping City, Taichung (TW)
(74) Representative: Becker Kurig Straus

(56) References cited:
- JP-A- 61 078 547
- JP-A- 63 076 746
- JP-A- 2007 182 922
- KR-A- 20040 082 743
- TW-B- 457 348

## Description

### BACKGROUND OF THE INVENTION

### 1. Field of the Invention

The present invention relates generally to a ball valve, and more specifically, to a valve ball element and method of manufacturing a valve ball element.

### 2. Description of the Related Art

The prior ball valve normally has a ball element wholly made by metal material for standing high pressure during a long time, and to prevent friction of the water flow, but the high density of metal result the ball element weighty.

The ball element made by metal material provided pressure resistance and friction resistance, but non-metal ball element often has the problem of dirty, chemical changes and durable; on the other hand, the metal ball element is weighty and inconvenient to assemble, and the cost of the raw material get higher day by day, it must be reduced the usage of the metal for cost down.

### SUMMARY OF THE INVENTION

The present invention has been accomplished under the circumstances in view. It is the main object of the present invention to provide a valve ball element and method of manufacturing a valve ball element, which can be produced by a new method to reduce the usage of metal but convenient to manufacture, and the valve ball element still maintain the advantages of cheap, light, durable and no chemical changes.

To achieve these and other objects of the present invention, the method of manufacturing a valve ball element comprises the steps of: selecting a first mold to form a first body; locating the first body into a second mold then formed a second body, the second body has a constant thickness of wax wrapped around the first body at outside thereon; preparing a third mold which is made of a molding method of dipping a shelling material, pouring high temperature molten metal into the third mold, the molten metal wrapped around the first body with a ball shell, after cooling down then formed a third body; healing the opening of the ball shell, machining the outer surface of the third body, cutting a slot, healing the opening corresponding the position post of the central point, polishing the outer surface of the third body to let the third body formed a pure smoothly complete product of a valve ball element which is cheap, light, durable and no chemical changes.

### BRIEF DESCRIPTION OF THE DRAWINGS

FIG. 1 is a flow chart of a manufacturing method of a ball valve element of a preferable embodiment of the present invention.
FIG. 2 is a schematic view of a fist mold of the preferable embodiment of the present invention.
FIG. 3 is a schematic view of a fist body of the preferable embodiment of the present invention.
FIG. 4 is a schematic view of wax removing status of the preferable embodiment of the present invention.
FIG 5 is a schematic view of a second body of the preferable embodiment of the present invention.
FIG. 6 is a schematic view of a third mold of the preferable embodiment of the present invention.
FIG 7 is a schematic view of a third body of the preferable embodiment of the present invention.
FIG 8 is a schematic view of cutting a slot of the preferable embodiment of the present invention.
FIG 9 is another schematic view of cutting a slot of the preferable embodiment of the present invention.
FIG. 10 is a schematic view of a complete product of the preferable embodiment of the present invention.
FIG 11 is a schematic view of a complete product of the preferable embodiment of the present invention, showing the operation of the ball valve.

### DETAILED DESCRIPTION OF THE INVENTION

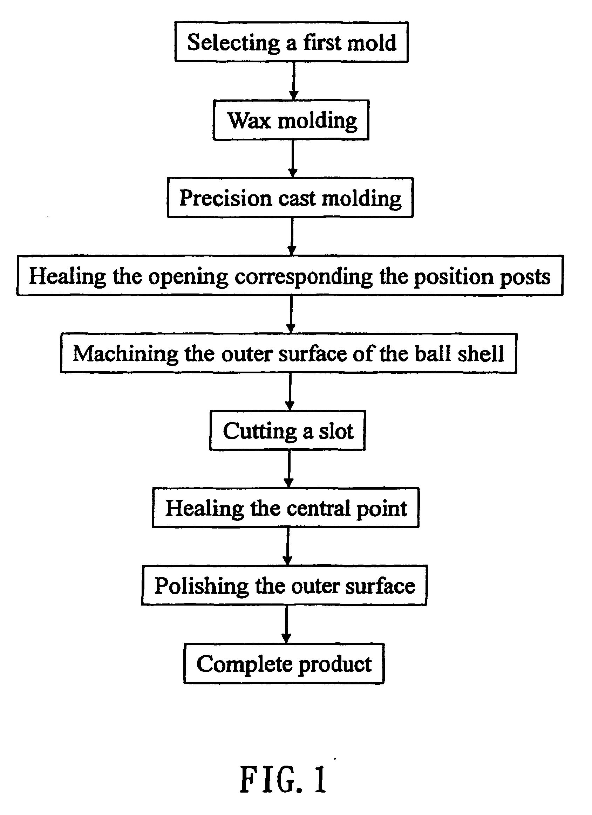

Please refer FIG 1 to FIG 10, a valve ball element and method of manufacturing a valve ball element of a preferable embodiment of the present invention is provided, the method of manufacturing a valve ball element comprises the steps of follows.

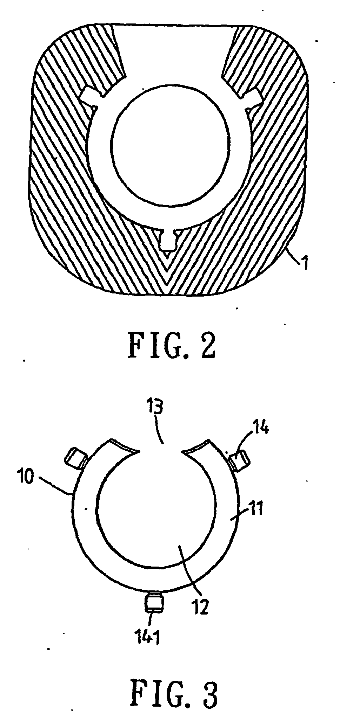

As shown in FIG. 2, selecting a first mold **1** of suitable size relative to a preferred ball element size, let the fire-resistant material of Magnesium Oxide or Aluminum Oxide casting into the first mold **1,** then formed a first body **10** showing as the FIG 3; the first body **10** has an inner filler **11** of arch shape or hollow ball shape, a through hole **12** opened throughout the inner filler **11,** an opening **13** formed between the two ends of the inner filler **11,** a plurality of position posts **14** protruded at outside of the inner filler **11,** wherein at least one of the position posts **14** is located align to a mirror central line of the inner filler **11,** a central point **141** then defined by the at least one position post **14.**

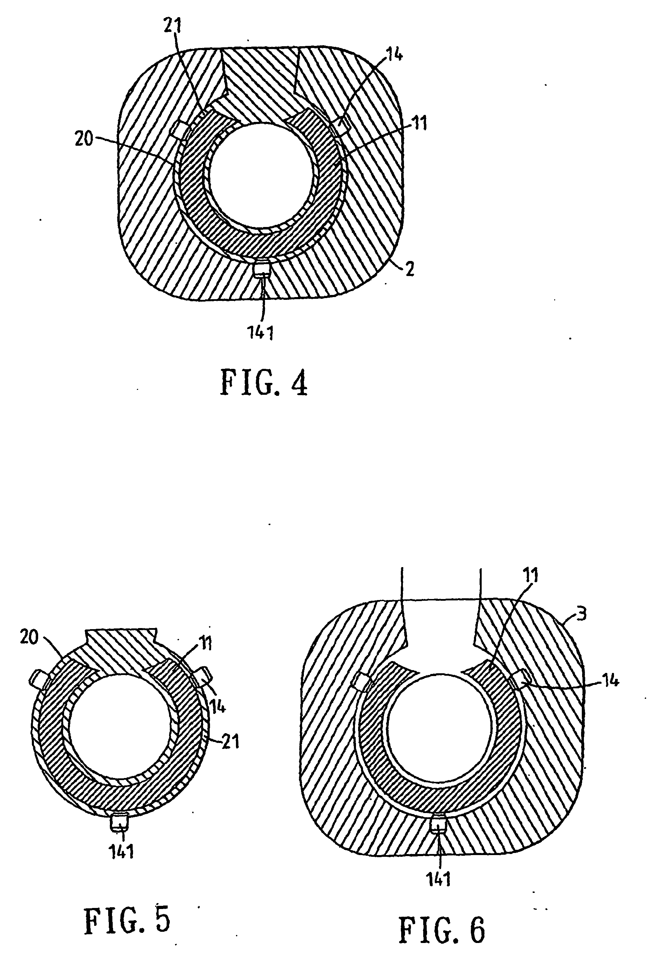

As shown in FIG 4, locating the first body **10** into a second mold **2** which is made of metal material and can be processed by lathing or CNC milling via precision control, let the position posts **14** of the first body **10** located on the second mold **2,** there maintain a predetermined distance and space between the inner filler **11** of the first body **10** and the inner wall of the second mold **2,** pouring wax liquid into the second mold 2,then formed a second body **20** as shown in FIG.5, the second body **20** has a constant thickness of wax **21** wrapped around the first body 10 at outside thereon.

Preparing a third mold **3** which is provided for high temperature molten metal cast molding, the third mold **3** is made of a composite material having high temperature resistance and difficult to processed by lathing or CNC milling via precision control, the third mold **3** is made of a molding method of dipping a shelling material, let the second body **20** dipping into and putting out from the shelling material for several times, and let the shelling material dried and formed a consolidate and collapsible shell and then formed a third mold **3,** the third mold **3** is wholly wrapped around the second body **20,** further using the high temperature steam to melt and remove the wax; FIG 6 shows the layer of wax **21** of the second body **20** is removed, there maintain a predetermined distance and space between the inner filler **11** of the first body **10** and the inner wall of the third mold **3,** pouring high temperature molten metal into the third mold **3,** because the inner filler **11** of the first body **10** is made of fire-resistant material and will not melt or deformed by the high temperature of the molten metal, the molten metal wholly closely wrapped around the inner filler **11** of the first body **10** with a ball shell **31,** after cooling down then formed a third body **30.**

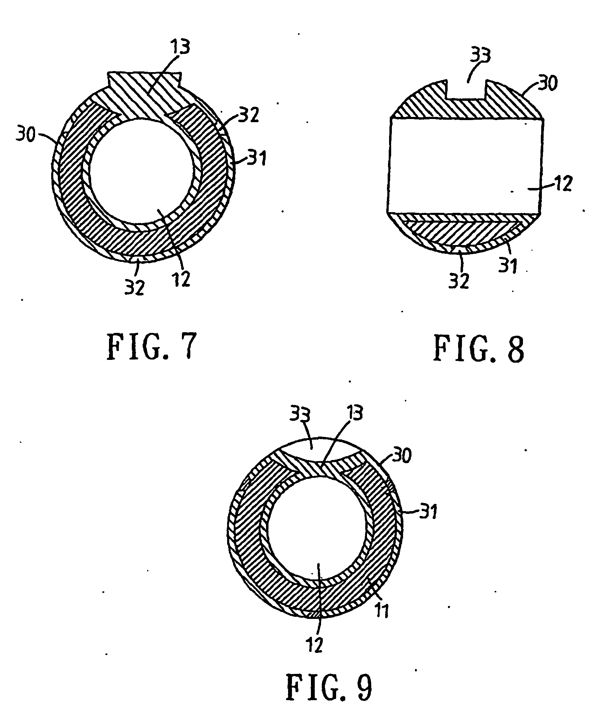

As shown in FIG 7, using knock method and the likes to remove the position posts **14** of the first body **10,** and healing the opening **32** of the ball shell **31** corresponding the position posts **14** except the central point **141** one; if the size of the valve ball element is bigger, the width of the opening **32** would not easy to welding, then it can be filled a metal block first, and then weld the gap between therein to healing the opening **32** of the ball shell **31,** it also achieve the function.

Machining the outer surface of the third body **30** to enhance the sphericity of the third body **30,** and removing the protrusions or embosses which leaved from the aforesaid steps.

As shown in FIG. 8, let the opening **32** of the ball shell **31** corresponding the central point **141** as a reference point, cutting a slot **33** at the opposite side of the ball shell **31,** the slot **33** will not cut to the inner filler **11** and formed between the opening **13** of the first body **10,** the slot **33** defined a direction perpendicular to a central axis line of the through hole **12,** the slot **33** is provided for turning control the ball valve.

Using the same step as the fourth step to welding and healing the opening **32** corresponding the position post **14** of the central point **141,** still also it can be filled a metal block first, and then weld the gap between therein to healing the opening **32** of the ball shell **31.**

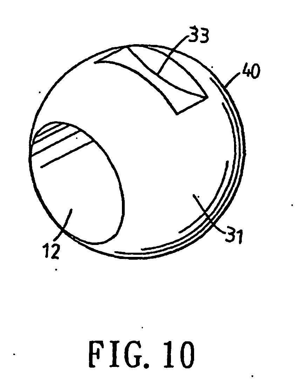

Polishing the outer surface of the third body **30,** let the third body **30** formed a pure smoothly complete product of a valve ball element **40,** as shown in FIG 10.

Please refer FIG. 9 and FIG 10, the valve ball element **40** made by aforesaid steps, wherein the inner filler **11** is non-metal material, so it is low cost and low density, and helping cost down to enhance the competitive to others, and attract the purchasers to buy and use, it is light and easy to produce and assembly; and the outer surface is same as the common valve ball element, which has the outer metal surface, higher the friction resistance and the pressure resistance, maintaining the advantages of the metal valve ball, but adding the advantages of cheap and light of the plastic valve ball element.

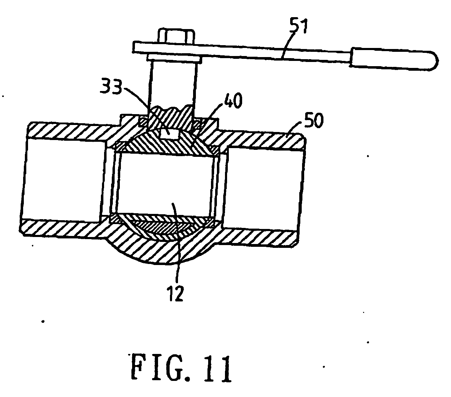

The ball element of the present invention, as shown in FIG 11, which is provided for installing to a ball valve that connected with a pipe **50,** and can be operated by a control bar **51** coupled to the slot **33** to achieve the function of controlling of open or close of the flow.

The description above is a few preferred embodiments of the present invention and the equivalence of the present invention is still in the scope of the claim of the present invention.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method of manufacturing a valve ball element (40), **characterized in that** the method comprises the steps of:
selecting a first mold (1) to formed a first body (10), the first body (10) has an inner filler (11) of a predetermined shape, a through hole (12) opened throughout the inner filler (11), a plurality of position posts (14) protruded at outside of the inner filler (11), wherein at least one of the position posts (14) is located align to a mirror central line of the inner filler (11), a central point (141) then defined by the at least one position post;
preparing a third mold (3) to cover the first body (10), there maintaining a predetermined distance and space between the inner filler (11) of the first body (10) and the inner wall of the third mold (3), pouring high temperature molten metal into the third mold (3), the molten metal wrapped around the inner filler (11) of the first body (10) with a ball shell (31), after cooling down then formed a third body (30);
using knock method and the likes to remove the position posts (14) of the first body (10), and healing the opening (32) of the ball shell (31) corresponding the position posts (14) except the central point (141) one;
machining the outer surface of the third body (30) to enhance the sphericity of the third body (30), and removing the protrusions or embosses which leaved from the aforesaid steps;
let the opening (32) of the ball shell (31) corresponding the central point (141) as a reference point, cutting a slot (33) at the opposite side of the ball shell (31);
healing the opening (32) corresponding the position post (14) of the central point (141);
polishing the outer surface of the third body (30) to let the third body (30) formed a pure smoothly complete product of a valve ball element (40).

2. The method as claimed in claim 1, further comprising the step of using a second mold (2) to form a second body (20) before the third mold (3) covered the first body (10), wherein the second body (20) has a constant thickness of wax (21) wrapped around the first body (10) at outside thereon.

3. The method as claimed in claim 2, wherein the third mold (3) is made of a molding method of dipping a shelling material, the third mold (3) is wholly wrapped around the second body (20).

4. The method as claimed in claim 3, wherein let the second body (20) dipping into and putting out from the shelling material for several times, and let the shelling material dried and formed a consolidate and collapsible shell and then formed a third mold (3).

5. The method as claimed in claim 2, further comprising a step to remove the wax (21) of the second body (20) after the third mold (3) is formed but before purring high temperature molten metal.

6. The method as claimed in claim 5, wherein using the high temperature steam to melt and remove the wax (21).

7. The method as claimed in claim 2, further comprising the step of locating the first body (10) into the second mold (2), wherein let the position posts (14) of the first body (10) located on the second mold (2).

8. The method as claimed in claim 1, wherein the first body (10) is made of fire-resistant material of Magnesium Oxide or Aluminum Oxide.

9. The method as claimed in claim 1, wherein the healing step of the position posts (14) is to healing the opening (32) of the ball shell (31) by welding.

10. The method as claimed in claim 1, further comprising a step to fill a metal block into the opening (32) first, and then welding the gap between therein to healing the opening (32) of the ball shell (31).

11. A valve ball element (40), **characterized in that** the valve ball element (40) comprises an inner filler (11) and a metal ball shell (31) wholly closely wrapped around the inner filler (11), the inner filler (11) being made of fire-resistant material, wherein the inner filler (11) reduced the metal volume ratio of the valve ball element (40), thereby lightening the weight and lowering the metal cost.

12. The valve ball element (40) as claimed in claim 11, wherein the inner filler (11) is formed of arch shape or hollow ball shape.

13. The valve ball element (40) as claimed in claim 11, wherein the material of the inner filler (11) is Magnesium Oxide or Aluminum Oxide.

## Patentansprüche

1. Verfahren zur Herstellung eines Kugel-Ventilelements (40), **dadurch gekennzeichnet, dass** das Verfahren die Schritt umfasst:
Wählen einer ersten Gießform (1), um einen ersten Körper (10) auszubilden, wobei der erste Körper (10) ein inneres Füllmaterial (11) mit einer bestimmten Form aufweist, ein Durchgangsloch (12), das durch das innere Füllmaterial (11) geht, mehrere Positionierungsstäbe (14), die von einer Außenseite des inneren Füllmaterials (11) vorstehen, wobei mindestens einer der Positionierungsstäbe (14) angeordnet ist, um zu einer gespiegelten Zentrumslinie des inneren Füllmaterials (11) ausgerichtet zu sein, wobei dann durch den mindestens einen Positionierungsstab ein zentraler Punkt (141) definiert wird,
Herstellen einer dritten Gießform (3), um den ersten Körper (10) zu bedecken, wodurch zwischen dem inneren Füllmaterial (11) des ersten Körpers (10) und der Innenwand der dritten Gießform (3) eine bestimmte Entfernung und ein bestimmter Raum aufrecht erhalten wird, Gießen von bei hoher Temperatur geschmolzenem Metall in die dritte Gießform (3), wobei das geschmolzene Metall das innere Füllmaterial (11) des ersten Körpers (10) mit einer Kugelhülle (31) ummantelt, nachdem der gebildete dritte Körper (30) abgekühlt wird;
Verwenden der Klopf-Methode und dergleichen, um die Positionierungsstäbe (14) des ersten Körpers (10) zu entfernen, und Ausbessern der Öffnung (32) der Kugelhülle (31) entsprechend der Positionierungsstäbe (14) ausser dem zentralen Punkt (141) eins;
Bearbeiten der äusseren Oberfläche des dritten Körpers (30), um die Kugelform des dritten Körpers (30) zu verbessern und Entfernen von Vorsprüngen oder Vertiefungen, die von den vorstehenden Schritten verbleiben,
Lassen der Öffnung (32) der Kugelhülle (31) entsprechend dem zentralen Punkt (141) als Referenzpunkt, Schneiden eines Schlitzes (33) an der abgewandten Seite der Kugelhülle (31);
Ausbessern der Öffnung (32) entsprechend dem Positionierungsstab (14) des zentralen Punkts (141);
Polieren der äusseren Oberfläche des dritten Körpers (30), so dass der dritte Körper (30) ein vollkommen glattes Produkt eines Kugel-Ventilelements (40) ausbildet.

2. Verfahren nach Anspruch 1, welches weiter den Schritt der Verwendung einer zweiten Gießform (2) umfasst, um einen zweiten Körper (20) auszubilden, bevor die dritte Gießform (3) den ersten Körper (10) bedeckt, wobei der zweite Körper (20) eine konstante Wachs-Dicke (21) aufweist, die um den ersten Körper (10) außen herum aufgebracht ist.

3. Verfahren nach Anspruch 2, wobei die dritte Gießform (3) hergestellt wird durch ein Gießverfahren von Eintauchen in ein Überzugsmaterial, wobei die dritte Gießform (3) den zweiten Körper (2) vollständig überzieht.

4. Verfahren nach Anspruch 3, wobei der zweite Körper (20) mehrmals in ein Überzugsmaterial getaucht und daraus entnommen wird und wobei das Überzugsmaterial trocknen gelassen wird und eine konsolidierte und zusammen-quetschbare Hülle ausbildet, und dann eine dritte Gießform (3) ausbildet.

5. Verfahren nach Anspruch 2, welches weiter den Schritt umfasst, Entfernen des Wachses (21) des zweiten Körpers (20) nachdem die dritte Gießform (3) ausgebildet ist, jedoch bevor bei hoher Temperatur geschmolzenes Metall gegossen wird.

6. Verfahren nach Anspruch 5, wobei ein Hochtemperatur-Dampf verwendet wird, um das Wachs (21) zu schmelzen und zu entfernen.

7. Verfahren nach Anspruch 2, welches weiter des Schritt umfasst, den ersten Körper (10) in der zweite Gießform (2) anzuordnen, wobei die Positionierungsstäbe (14) des ersten Körpers (10) auf der zweiten Gießform (2) stehen gelassen werden.

8. Verfahren nach Anspruch 1, wobei der erste Körper (10) aus einem feuer-resistenten Material von Magnesiumoxid oder Aluminiumoxid hergestellt ist.

9. Verfahren nach Anspruch 1, wobei der Ausbesserungsschritt der Positionierungsstäbe (14) darin besteht, die Öffnungen (32) der Kugelhülle (31) durch Schweißen auszubessern.

10. Verfahren nach Anspruch 1, welches weiter einen Schritt umfasst, zuerst einen Metallblock in die Öffnung (32) zu füllen und dann den Spalt dazwischen zu schweißen, um die Öffnung (32) der Kugelhülle (31) auszubessern.

11. Kugel-Ventilelement (40), **dadurch gekennzeichnet, dass** das Kugel-Ventilelement (40) ein inneres Füllmaterial (11) und eine Kugelhülle aus Metall (31) umfasst, die das innere Füllmaterial (11) vollständig ummantelt, worin das innere Füllmaterial (11) aus einem Feuer-resistenten Material besteht, worin das innere Füllmaterial (11) das Metall-Volumenverhältnis des Kugel-Ventilelements (40) reduziert, wodurch das Gewicht verringert und die Metallkosten gesenkt werden.

12. Kugel-Ventilelement (40) nach Anspruch 11, worin das innere Füllmaterial (11) die Form eines Bogens oder die Form einer hohlen Kugel aufweist.

13. Kugel-Ventilelement (40) nach Anspruch 11, worin das Material des inneren Füllmaterials (11) Magnesiumoxid oder Aluminiumoxid ist.

## Revendications

1. Un procédé de fabrication d'un élément de valve à bille (40) **caractérisé en ce que** le procédé comprend les étapes de :
choisir un premier moule (1) pour former un premier corps (10), le premier corps (10) comportant une charge interne (11) d'une forme prédéterminée, un trou traversant (12) ménagé au travers de la charge interne (11), une pluralité de guides de positionnement (14) faisant saillie à l'extérieur de la charge interne (11), dans le quel au moins un des repères (14) est placé dans l'alignement d'un axe de symétrie de la charge interne (11), un point central (141) étant ensuite défini par le au moins un repère ;
préparer un troisième moule (3) pour recouvrir le premier corps (10), y maintenir une distance et un espace prédéterminés entre la charge interne (11) du premier corps (10) et la paroi interne du troisième moule (3), verser du métal fondu à haute température dans le troisième moule (3), le métal fondu enveloppant la charge interne (11) du premier corps (10) avec une coque de bille (31), formant ainsi un troisième corps (30) après refroidissement ;
utiliser le martelage et des procédés similaires pour ôter les repères (14) du premier corps (10) et combler l'ouverture (32) de la coque de bille (31) correspondant aux repères (14) à l'exception du point de repère central (14) ;
usiner la surface externe du troisième corps (30) pour améliorer la sphéricité du troisième corps (30) et ôter les pointes ou estampes laissées par les étapes susmentionnées ;
laisser l'ouverture (32) de la coque de bille(31) correspondant au point central (141) comme point de référence, découper une fente (33) sur le côté opposé de la coque de bille (31) ;
combler l'ouverture (32) correspondant au repère (14) du point central (141) ;
polir la surface externe du troisième corps (30) pour que le troisième corps (30) forme un pur produit complet d'un élément de valve à bille sans à-coups.

2. Le procédé tel que revendiqué dans la revendication 1 comprenant en outre l'étape d'utiliser un deuxième moule (2) pour former un deuxième corps (20) avant que le troisième moule (30) ne recouvre le premier corps (10), dans lequel le deuxième corps (20) comporte à sa surface externe une épaisseur constante de cire (21) enveloppée autour du premier corps (10).

3. Le procédé tel que revendiqué dans la revendication 2 dans lequel le troisième moule (3) est obtenu au moyen d'un procédé de moulage par trempage dans un matériau de couverture, le troisième moule (3) enveloppant entièrement le deuxième corps (20).

4. Le procédé tel que revendiqué dans la revendication 3 dans lequel on fait tremper le deuxième moule (20) dans du matériau d'enrobage et ressortir à plusieurs reprises, et on laisse sécher le matériau d'enrobage et former une coque solidifiée et démontable et former ainsi un troisième moule (3).

5. Le procédé tel que revendiqué dans la revendication 2 comprenant en outre une étape pour éliminer la cire (21) du deuxième corps (20) après que le troisième corps (3) fût formé, mais avant de verser le métal fondu à haute température.

6. Le procédé tel que revendiqué dans la revendication 5 dans lequel on utilise la vapeur à haute température pour faire fondre et éliminer la cire (21).

7. Le procédé tel que revendiqué dans la revendication 2 comprenant en outre l'étape de disposer le premier corps (10) dans le deuxième moule (2) dans lequel les repères (14) du premier corps (10) sont disposés sur le deuxième moule (2).

8. Le procédé tel que revendiqué dans la revendication 1 dans lequel le premier corps (10) est fait d'un matériau résistant au feu en oxyde de magnésium ou en oxyde d'aluminium.

9. Le procédé tel que revendiqué dans la revendication 1 dans lequel l'étape de combler les repères (14) est de combler l'ouverture (32) de la coque de bille (31) par soudage.

10. Le procédé tel que revendiqué dans la revendication 1 comprenant en outre l'étape de placer premièrement un bloc de métal dans l'ouverture (32) et de souder ensuite l'espace subsistant pour combler l'ouverture (32) de la coque de bille (31).

11. Un élément de valve sphérique (40) **caractérisé en ce que** l'élément de valve sphérique (40) comprend une charge interne (11) et une coque de bille de métal entièrement et étroitement enveloppée autour de la charge interne (11), la charge interne (11) étant faite d'un matériau résistant au feu, dans lequel la charge interne réduite la portion volume de métal de l'élément de valve sphérique (40), allégeant ainsi le poids et abaissant le coût du métal.

12. L'élément de valve sphérique (40) tel que revendiqué dans la revendication 11 dans lequel la charge interne (11) est en forme de voûte ou de boule creuse.

13. L'élément de valve sphérique (40) tel que revendiqué dans la revendication 11 dans lequel le matériau de la charge interne (11) est l'oxyde de magnésium ou l'oxyde d'aluminium
